# EUROPÄISCHE PATENTSCHRIFT

(11) **EP 1 412 265 B1**
(45) Veröffentlichungstag und Bekanntmachung des Hinweises auf die Patenterteilung: **14.09.2005**
(21) Anmeldenummer: 02751141.9
(22) Anmeldetag: 16.07.2002
(51) Int. Cl.: B65G 15/02

(54) **STAUFÄHIGES KURVENELEMENT FÜR EIN TRANSFERSYSTEM**
ACCUMULATION-CAPABLE CURVED ELEMENT FOR A TRANSFER SYSTEM
ELEMENT DE COURBE CAPABLE DE RETENIR DES ARTICLES, POUR UN SYSTEME DE TRANSFERT

(30) Priorität: 20.07.2001 DE 10135591
(43) Veröffentlichungstag der Anmeldung: 28.04.2004
(73) Patentinhaber: ROBERT BOSCH GMBH, 70442 Stuttgart (DE)
(72) Erfinder: LEISNER, Ernst, 71638 Ludwigsburg (DE)
(86) Internationale Anmeldenummer: PCT/EP2002/007870
(87) Internationale Veröffentlichungsnummer: WO 2003/020617

(56) Entgegenhaltungen:
- DE-A- 4 439 107
- DE-A- 19 500 546
- DE-A- 19 934 361
- DE-U- 9 422 363

## Beschreibung

### Stand der Technik

Die vorliegende Erfindung betrifft ein staufähiges Kurvenelement für ein Transfersystem zum Transport von Gütern, insbesondere zum Transport von Werkstückträgern, auf welchen die Güter angeordnet sind.

Beispielsweise in der Montage werden Werkstücke von Arbeitsstation zu Arbeitsstation mittels eines Transfersystems befördert. Als Fördermittel werden dabei häufig zwei stetig umlaufende, parallele Spuren verwendet, auf welchen Werkstückträger, welche Werkstücke aufnehmen, transportiert werden. Je nach Layout des Transfersystems müssen dabei auch Kurven bzw. 180°-Umlenkungen vorgesehen werden. Als Kurvenelemente sind für derartige Transfersysteme beispielsweise so genannte Rollenkurven bekannt, bei denen eine Vielzahl von nebeneinander angeordneten Rollen, welche über die gesamte Breite der Spur verlaufen, angeordnet sind. Hierbei enden die beiden Spuren vor dem Kurvenelement und werden vor dem Kurvenelement umgelenkt.

Aus der DE 94 22 363 U1 ist eine Vorrichtung zum Umsetzen von Teilen von einer ersten auf eine zweite Förderbahn bekannt, bei der die Außenspur nicht durchgängig ausgebildet ist, sondern in der Kurve einen Rundriemen aufweist. Die Teile werden ausschließlich von dem Rundriemen entlang einer Außenführung durch die Kurve bewegt. Der Rundriemen folgt dem Kurvenverlauf durch eine Mehrzahl von im Kurvenbereich angeordneten Führungsrollen. Diese Vorrichtung entspricht dem Oberbegriff des Anspruchs 1.

Die beiden oben erläuterten bekannten Kurvenelemente haben jedoch den Nachteil, dass auf der Kurve nicht gestaut werden darf, weil sich hierbei der Werkstückträger leicht verklemmen kann und der weitere Transport damit unterbrochen wird. Weiterhin würde insbesondere bei dem Rundriemen bei einem Aufstauen der Werkstückträger ein unzulässig hoher Verschleiß auftreten, was dessen Lebensdauer signifikant verringern würde. Daher muss bei diesen bekannten Kurvenelementen sichergestellt werden, dass die Werkstückträger einzeln durchlaufen. Dies erfordert einen hohen steuerungstechnischen Aufwand und wirkt sich weiterhin nachteilig auf eine minimate mögliche Taktzeit aus.

Weiterhin ist es bekannt, die beiden Spuren mittels einer kurvengängigen Rollenkette durchgehend durch die Kurve zu führen. Da jedoch der Radius der kurvengängigen Spuren sehr begrenzt ist, kann mit einer derartigen Lösung nur ein großer Kurvenradius realisiert werden, was sich nachteilig auf den Platzbedarf und damit auf mögliche Anlagen-Layouts auswirkt. Damit ist der Einsatz dieses so genannten Doppelspur-Kurvenelements sehr begrenzt.

### Vorteile der Erfindung

Das erfindungsgemäße Kurvenelement für ein Transfersystem mit den Merkmalen des Patentanspruchs 1 hat demgegenüber den Vorteil, dass ein Aufstauen der Güter bzw. der Werkstückträger im Kurvenelement möglich ist. Dabei tritt kein außerordentlich großer Verschleiß an den Spuren des Kurvenelements auf. Weiterhin kann mit dem erfindungsgemäßen Kurvenelement eine Kurve mit einem sehr kleinen Radius ausgebildet werden, so dass sich hinsichtlich des Layouts für das Transfersystem keine Einschränkungen ergeben. Das erfindungsgemäße Kurvenelement kann dabei Kurvenbereiche ausbilden, welche nur einen sehr geringen Platzbedarf, selbst bei einer 180°-Kurve, benötigen. Dies ist möglich, da erfindungsgemäß nur eine kurvengängige Außenspur durchgehend im Kurvenbereich ausgebildet ist und die Innenspur nicht durchgängig, sondern zweiteilig ausgebildet ist. Dabei besteht die Innenspur aus einer ersten Innenspur und einer zweiten Innenspur, wobei mindestens eine der ersten oder zweiten Innenspuren gerade in den Kurvenbereich hineinragt. Mit anderen Worten ist mindestens eine der Innenspuren derart ausgebildet, dass sie nicht mehr parallel zur Außenspur verläuft, sondern gerade in den Kurvenbereich verlängert ist, so dass sie auf die Außenspur zuläuft. Um zu verhindern, dass die Güter bzw. die Werkstückträger von dem Kurvenelement herunterfallen, ist an der Außenseite der Außenspur eine Außenführung angeordnet, welche auch die Führungsfunktion des Gutes bzw. des Werkstückträgers im Kurvenbereich übernimmt.

Vorzugsweise weist die in den Kurvenbereich vorstehende Innenspur eine derartige Länge auf, dass sie über eine gedachte Mittellinie, welche zwischen den zueinander parallelen Innen- und Außenspuren liegt, vorsteht. Dies ermöglicht es, dass die vorstehende Innenspur die Drehung des Gutes bzw. Werkstückträgers im Kurvenbereich besonders vorteilhaft unterstützt, da eine ständige Relativbewegung zwischen dem Werkstückträger und der Innenspur vorhanden ist.

Dadurch wird die Reibung reduziert und die Kurve kann problemlos durchfahren werden. Weiterhin kann dadurch ein Haken des Werkstückträgers verhindert werden, so dass eine hohe Betriebssicherheit des Transfersystems im Kurvenelement gewährleistet werden kann.

Um eine besonders gute Führung des Gutes bzw. des Werkstückträgers im Kurvenelement sicherstellen zu können, ist vorzugsweise eine Innenführung vorgesehen. Dies ermöglicht ein besonders sicheres Durchfahren des Kurvenelements.

Um eine gute Kraftübertragung an den Innenspuren des Kurvenelements sicherzustellen, weisen eine oder beide in den Spuren vorzugsweise Kettenspanner auf.

Vorzugsweise ragt bei einem Kurvenelement, welches als 90°.-Kurve ausgebildet ist, nur eine der beiden inneren Spuren in den Kurvenbereich.

Bevorzugt ragt bei einem Kurvenelement, welches als eine 180°-Kurve ausgebildet ist, sowohl die erste als auch die zweite Innenspur der geteilten Innenspur in den Kurvenbereich vor. Besonders bevorzugt weisen die erste und die zweite Innenspur dabei die gleiche Länge auf, mit welcher sie in den Kurvenbereich hineinragen.

Vorzugsweise ist bei einem Kurvenelement für eine 180°-Kurve nur ein Antrieb vorgesehen, welcher die Außenspur und die beiden Innenspuren antreibt. Die beiden Innenspuren werden dabei jeweils über Antriebswellen angetrieben.

Gemäß einer anderen bevorzugten Ausgestaltung der vorliegenden Erfindung weist das Kurvenelement zwei separate Antriebe auf, welche jeweils eine Antriebswelle antreiben.

Gemäß einer weiteren anderen bevorzugten Ausgestaltung der vorliegenden Erfindung weist das Kurvenelement einen Antrieb sowie ein Wendegetriebe auf, welches zwischen der ersten und der zweiten Innenspur angeordnet ist, um die zweite Innenspur anzutreiben.

Erfindungsgemäß ist die Außenspur als Flachplattenkette ausgebildet, welche vorzugsweise aus einer kurvengängigen Rollenkette mit daran befestigten Auflageplatten besteht. Die Innenspur muss nicht zwangsweise aus einer kurvengängigen Flachplattenkette bestehen, abhängig vom Layout kann es jedoch sinnvoll sein, auch die Innenkette als kurvengängige Flachplattenkette auszubilden, wenn beispielsweise bei einem nächsten Kurvenstück die Innenkette zu einer Außenkette im Kurvenbereich wird.

Somit wird erfindungsgemäß ein staufähiges Kurvenelement bereitgestellt, welches einen geringen Verschleiß aufweist. Durch die unterteilte Innenspur, welche im Kurvenbereich nicht mehr parallel zur Außenspur geführt ist, wird zusätzlich eine Unterstützung der Kurvenbewegung des Gutes bzw. Werkstückträgers bereitstellt. Dabei ist das erfindungsgemäße Kurvenelement einfach aufgebaut und kann zuverlässig in der Förderstrecke betrieben werden. Dabei können erfindungsgemäß auch kleinste Radien ausgebildet werden, so dass keine Einschränkungen für das Layout des Transfersystems gegeben sind.

### Zeichnung

Mehrere Ausführungsbeispiele der Erfindung sind in der Zeichnung dargestellt und werden in der nachfolgenden Beschreibung näher erläutert.
- Figur 1: zeigt Draufsicht eines Kurvenelements gemäß einem ersten Ausführungsbeispiel der vorliegenden Erfindung,
- Figur 2: zeigt eine perspektivische Ansicht des in Figur 1 gezeigten Kurvenelements und
- Figur 3: zeigt eine perspektivische Aussicht eines Kurvenelements gemäß einem zweiten Ausführungsbeispiel der vorliegenden Erfindung.

### Beschreibung der Ausführungsbeispiele

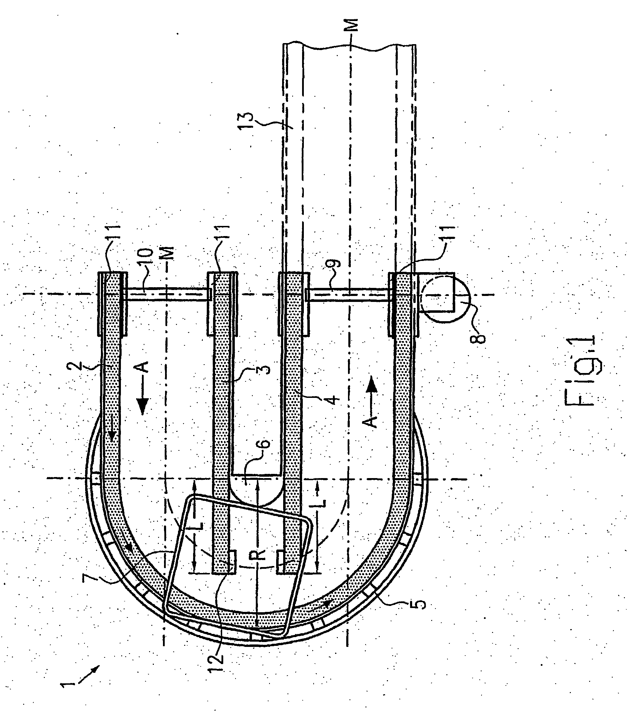

Nachfolgend wird unter Bezugnahme auf die Figuren 1 und 2 ein Kurvenelement 1 gemäß einem ersten Ausführungsbeispiel der vorliegenden Erfindung beschrieben.

Wie in den Figuren 1 und 2 gezeigt, umfasst das Kurvenelement 1 eine Außenspur 2, eine erste Innenspur 3 sowie eine zweite Innenspur 4. Das Kurvenelement 1 des ersten Ausführungsbeispiels bildet dabei eine 180°-Kurve. An der Außenseite der Außenspur 2 ist eine Außenführung 5 vorgesehen, um einen Werkstückträger 7, welcher auf den Außen- und Innenspuren aufliegt, im Kurvenbereich zu führen. Weiterhin ist eine Innenführung 6 vorgesehen, welche den Werkstückträger 7 am inneren Abschnitt des Kurvenbereichs führt.

Das Kurvenelement 1 ist in Modulbauweise ausgeführt, so dass es an unterschiedlichsten Förderstrecken eingesetzt werden kann und auch eine einfache Layout-Änderung unter Verwendung des Kurvenelement-Moduls möglich ist.

Die Außenspur 2 sowie die erste und zweite Innenspur 3 und 4 sind als kurvengängige Flachplattenketten ausgebildet, welche eine kurvengängige Rollenkette mit daran aufgeclipsten Kunststoff-Auflageplatten umfasst. Die Kette wird dabei in einem Aluminium-Strangpressprofil geführt.

Der Radius R der Außenspur 2 entspricht dabei einem an die Größe des Merkstückträgers 7 angepassten Radius. Abhängig von der Größe der Werkstückträger 7 kann somit eine 180°-Kurve mit minimalen Abmessungen bereitgestellt werden.

Die Außenspur sowie die erste und zweite Innenspur bestehen jeweils aus einem Obertrum sowie einem Untertrum und weisen jeweils Umlenkstationen 11 an ihren Endabschnitten auf (vgl. Figur 1). Das Kurvenelement 1 wird dabei von einem gemeinsamen Antrieb 8 angetrieben, welcher unmittelbar die Außenspur 2 antreibt und über eine erste Antriebswelle 9 auch die zweite Innenspur 4 antreibt. Die erste Innenspur 3 wird über eine zweite Antriebswelle 10 angetrieben, welche mit dem der Antriebsseite entgegengesetzten Ende der Außenspur 2 in Verbindung steht und somit die erste Innenspur 3 mittelbar antreibt. Um ein Verhaken des Werkstückträgers an der schiebenden ersten Innenspur 3 zu verhindern, ist ein Kettenspanner 12 vorgesehen.

In den Figuren 1 und 2 ist weiterhin eine Fortsetzung der Förderstrecke in gestrichelten Linien dargestellt. Es sei angemerkt, dass das Kurvenelement an seiner Auslaufseite, an welcher der Antrieb 8 angeordnet ist, auch eine größere Länge als dargestellt aufweisen kann.

Wie insbesondere aus Figur 1 ersichtlich ist, weisen sowohl die erste Innenspur 3 als auch die zweite Innenspur 4 einen gerade in den Kurvenbereich hineinragenden Abschnitt auf. Dieser vorstehende Abschnitt weist jeweils eine Länge L auf. Die Länge L ist dabei deutlich größer als der halbe Radius R der Außenspür 2. Dadurch ragen die beiden verlängerten Abschnitte der ersten und zweiten Innenspüren 3 und 4 über eine Mittellinie M-M vor, welche die Mitte zwischen den ansonsten parallel verlaufenden Außen- und Innenspuren festlegt (vgl. Figur 1).

Die Funktion des Kurvenelements 1 ist dabei wie folgt. Der Werkstückträger 7 läuft gerade in die Kurve ein und wird von der durchgehenden Außenspur 2 und der Außenführung 5 in die Kurve geführt. Dabei bildet der in die Kurve vorstehende Bereich der ersten Innenspur 3 eine schiebende Einheit, welche das Durchfahren der Kurve unterstütizt, da zwischen dem Werkstückträger 7 und dem vorstehenden Bereich der ersten Innenspur 3 ständig eine Relativbewegung herrscht, so dass die Reibung zwischen diesen Teilen reduziert wird. Sobald der Werkstückträger 7 das Kurvenelement über die Mitte der 180°-Kurve durchlaufen hat, kommt er mit der zweiten Innenspur 4 in Kontakt, welche den Werkstückträger 7 in Richtung der Auslaufseite zieht, so dass ab diesem Zeitpunkt die zweite Innenspur 4 die Kurvendurchfahrt des Werkstückträgers 7 unterstützt. Dieser Zustand ist in Figur 1 dargestellt.

Während des gesamten Durchlaufens der Kurve ist der Werkstückträger 7 dabei sowohl an der Außenführung 5 als auch an der Innenführung 6 geführt, wodurch insbesondere auch ein Verhaken des Werkstückträgers verhindert wird, so dass eine hohe Betriebssicherheit gewährleistet werden kann.

Da zwischen der zweiten Innenspur 4 und dem Werkstückträger 7 ebenfalls ständig eine Relativbewegung vorliegt, ist die Reibung zwischen diesen beiden Elementen ebenfalls herabgesetzt.

Um eine möglichst große Unterstützung sowohl der ersten Innenspur 3 als auch der zweiten Innenspur 4 des Drehvorgangs während des Durchlaufens der Kurve zu erreichen, weisen die beiden vorstehenden Bereiche der Innenspuren 3 und 4 jeweils eine Länge L auf, welche größer als die Länge des halben Radius R der Außenspur ist. Es ist jedoch auch möglich, dass die vorstehenden Bereiche der Innenspuren 3 und 4 nur eine kleinere Länge aufweisen. Allerdings ist dadurch die Unterstützung der Drehbewegung während der Durchfahrt durch die Kurve etwas vermindert. Deshalb sollte die Länge der beiden vorstehenden Bereiche der ersten und zweiten Innenspur wenigstens die Länge des halben Radius R aufweisen.

Wie in Figur 2 gezeigt, ist das Kurvenelement in bekannter Weise auf einer Vielzahl von Standfüßen 14 abgestützt.

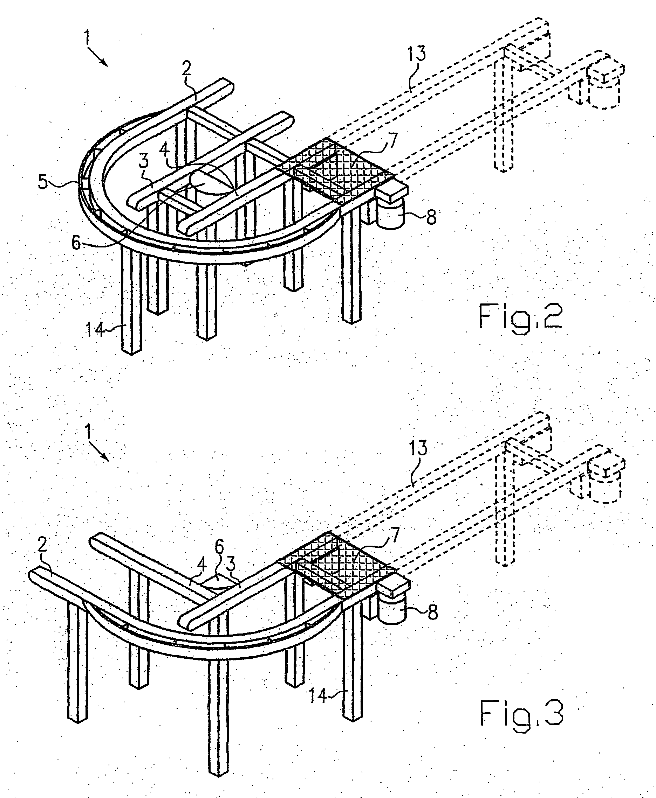

In Figur 3 ist ein Kurvehelemeht 1 gemäß einem zweiten Ausführungsbeispiel der vorliegenden Erfindung dargestellt. Gleiche bzw. funktional gleiche Teile sind dabei mit den gleichen Bezugszeichen wie im ersten Ausführungsbeispiel bezeichnet.

Wie in Figur 3 gezeigt, ist das Kurvenelement 1 des zweiten Ausführungsbeispiels als eine 90°-Kurve ausgebildet. Dabei ist die Außenspur 2 wieder durchgehend ausgebildet und die Innenspur ist in eine erste Innenspur 3 sowie eine zweite Innenspur 4 unterteilt. Die beiden ersten und zweiten Innenspuren 3 und 4 weisen dabei wieder jeweils einen vorstehenden Bereich auf, welcher in den Kurvenbereich gerade vorsteht.

Wie aus Figur 3 ersichtlich ist, ist dabei der vorstehende Bereich der ersten Innenspur 3 deutlich länger ausgebildet und steht weiter in den Kurvenbereich vor als der vorstehende Bereich der zweiten Innenspur 4. Somit steht der vorstehende Bereich der ersten Innenspur 3 deutlich über eine gedachte Mittellinie zwischen den ansonsten parallel verlaufenden Innen- und Außenspuren vor. Die zweite Innenspur 4 steht dabei derart in den Kurvenbereich vor, dass sie unmittelbar benachbart zur Seite der ersten Innenspur 3 angeordnet ist.

Entsprechend dem ersten Ausführungsbeispiel unterstützen die vorstehenden Bereiche der ersten und zweiten Innenspuren 3 und 4 jeweils die Drehbewegung eines auf den Außen- und Innenspuren beförderten Werkstückträgers 7.

Ansonsten entspricht das.zweite Ausführungsbeispiel im Wesentlichen dem ersten Ausführungsbeispiel, so dass auf die dort gegebene Beschreibung verwiesen werden kann.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Kurvenelement für ein Transfersystem zum Transport von Gütern umfassend eine kurvengängige Außenspur (2) und eine Innenspur, auf welchen die Güter unmittelbar oder mittels Werkstückträger (7) transportiert werden, wobei an der Außenseite der Außenspur (2) eine Außenführung (5) angeordnet ist und die Außenspur (2) im Kurvenbereich durchgehend ausgebildet ist, wobei die Innenspur zweiteilig aus einer ersten Innenspur (3) sowie einer zweiten Innenspur (4) gebildet ist, und mindestens eine der ersten oder zweiten Innenspuren (3, 4) gerade in den Kurvenbereich hineinragt, **dadurch gekennzeichnet, dass** zumindest die Außenspur (2) als kurvengängige Flachplattenkette ausgebildet ist.

2. Kurvenelement nach Anspruch 1, **dadurch gekennzeichnet, dass** die erste Innenspur (3) und/oder die zweite Innenspur (4) über eine gedachte Mittellinie (M-M) in den Kurvenbereich hineinragt.

3. Kurvenelement nach Anspruch 1 oder 2, **dadurch gekennzeichnet, dass** weiter eine Innenführung (6) vorgesehen ist, welche die Güter oder Werkstückträger (7) an der Innenseite des Kurvenbereichs führt.

4. Kurvenelement nach einem der Ansprüche 1 bis 3, **dadurch gekennzeichnet, dass** mindestens eine der ersten oder zweiten Innenspuren (3, 4) mit einem Kettenspanner (12) ausgebildet ist.

5. Kurvenelement nach einem der Ansprüche 1 bis 4, **dadurch gekennzeichnet, dass** das Kurvenelement als 90°-Kurve ausgebildet ist, und nur eine der ersten oder zweiten Innenspuren (3, 4) in den Kurvenbereich hineinragt.

6. Kurvenelement nach einem der Ansprüche 1 bis 4, **dadurch gekennzeichnet, dass** das Kurvenelement als 180°-Kurve ausgebildet ist, und sowohl die erste Innenspur (3) als auch die zweite Innenspur (4) in den Kurvenbereich hineinragen.

7. Kurvenelement nach einem der Ansprüche 1 bis 6, **dadurch gekennzeichnet, dass** das Kurvenelement einen Antrieb (8) und zwei Antriebswellen (9, 10) für den Antrieb der Außenspur (2) und der beiden Innenspuren (3, 4) umfasst.

8. Kurvenelement nach einem der Ansprüche 1 bis 6, **dadurch gekennzeichnet, dass** das Kurvenelement zwei Antriebe umfasst, welche jeweils eine Antriebswelle (9, 10) antreiben.

9. Kurvenelement nach einem der Ansprüche 1 bis 6, **dadurch gekennzeichnet, dass** das Kurvenelement ein Wendegetriebe umfasst, welches zwischen der ersten Innenspur (3) und der zweiten Innenspur (4) angeordnet ist, um die Antriebskraft von der einen Innenspur auf die andere Innenspur zu übertragen.

## Claims

1. Curved element for a transfer system for the transport of articles, comprising a curved outer track (2) and an inner track, on which tracks the articles are transported directly or by means of workpiece carriers (7), an outer guide (5) being arranged on the outside of the outer track (2), and the outer track (2) being designed continuously in the curved region, the inner track being formed in two parts from a first inner track (3) and a second inner track (4), and at least one of the first or second inner tracks (3, 4) projecting straight into the curved region, **characterized in that** at least the outer track (2) is designed as a curved flat-plate chain.

2. Curved element according to Claim 1, **characterized in that** the first inner track (3) and/or the second inner track (4) project/projects into the curved region beyond an imaginary centre line (M-M).

3. Curved element according to Claim 1 or 2, **characterized in that**, further, an inner guide (6) is provided, which guides the articles or workpiece carriers (7) on the inside of the curved region.

4. Curved element according to one of Claims 1 to 3, **characterized in that** at least one of the first or second inner tracks (3, 4) is designed with a chain tensioner (12).

5. Curved element according to one of Claims 1 to 4, **characterized in that** the curved element is designed as a 90° curve and only one of the first or second inner tracks (3, 4) projects into the curved region.

6. Curved element according to one of Claims 1 to 4, **characterized in that** the curved element is designed as a 180° curve and both the first inner track (3) and the second inner track (4) project into the curved region.

7. Curved element according to one of Claims 1 to 6, **characterized in that** the curved element comprises a drive (8) and two drive shafts (9, 10) for the drive of the outer track (2) and of the two inner tracks (3, 4).

8. Curved element according to one of Claims 1 to 6, **characterized in that** the curved element comprises two drives which in each case drive a drive shaft (9, 10).

9. Curved element according to one of Claims 1 to 6, **characterized in that** the curved element comprises a reversing gear which is arranged between the first inner track (3) and the second inner track (4), in order to transmit the drive force from one inner track to the other inner track.

## Revendications

1. Elément de courbe pour un système de transfert pour transporter des articles comprenant une voie extérieure en forme de courbe (2) et une voie intérieure, sur lesquelles les articles sont transportés directement ou à l'aide d'un porte-pièce (7), avec sur la face extérieure de la voie extérieure (2) un guidage extérieur (5), la voie extérieure (2) étant traversante dans la zone de courbe alors que la voie intérieure est formée en deux parties par une première voie intérieure (3) et une seconde voie intérieure (4), dont au moins la première ou la seconde voie intérieure (3, 4) fait directement saillie dans la zone de courbe,
**caractérisé en ce qu'**
au moins la zone extérieure (2) a la forme d'une chaîne de plaques plates en forme de courbe.

2. Elément de courbe selon la revendication 1,
**caractérisé en ce que**
la première voie intérieure (3) et/ou la seconde voie intérieure (4) fait saillie dans la zone de courbe au-delà d'une ligne médiane (M-M).

3. Elément de courbe selon l'une quelconque des revendications 1 ou 2,
**caractérisé en ce qu'**
un guidage intérieur (6) est en outre prévu pour guider les articles ou le porte-pièce (7) sur la face intérieure de la zone de courbe.

4. Elément de courbe selon l'une quelconque des revendications 1 à 3,
**caractérisé en ce qu'**
au moins la première ou la seconde voie intérieure (3, 4) est formée avec un tendeur de chaîne (12).

5. Elément de courbe selon l'une quelconque des revendications 1 à 4,
**caractérisé en ce que**
l'élément de courbe est une courbe à 90°, et seule la première ou la seconde voie intérieure (3, 4) pénètre dans la zone de courbe.

6. Elément de courbe selon l'une quelconque des revendications 1 à 4,
**caractérisé en ce que**
l'élément de courbe est une courbe à 180°, et aussi bien la première voie intérieure (3) que la seconde voie intérieure (4) pénètre dans la zone de courbe.

7. Elément de courbe selon l'une quelconque des revendications 1 à 6,
**caractérisé en ce que**
l'élément de courbe comprend un entraînement (8) et deux arbres d'entraînement (9, 10) pour l'entraînement de la voie extérieure (2) et des deux voies intérieures (3, 4).

8. Elément de courbe selon l'une quelconque des revendications 1 à 6,
**caractérisé en ce qu'**
il comprend deux entraînements qui entraînent chacun un arbre d'entraînement (9, 10).

9. Elément de courbe selon l'une quelconque des revendications 1 à 6,
**caractérisé en ce qu'**
il comprend un inverseur de marche disposé entre la première voie intérieure (3) et la seconde voie intérieure (4) afin de transmettre la force d'entraînement d'une voie intérieure à l'autre voie intérieure.
